# EUROPEAN PATENT APPLICATION

(11) **EP 2 716 342 A1**
(43) Date of publication of application: **09.04.2014**
(21) Application number: 13186822.6
(22) Date of filing: 01.10.2013
(51) Int. Cl.: B01D 21/24, D21D 5/00

(54) **Clarifier with feedwell and methods of clarifying liquids**

(30) Priority: 02.10.2012 US 201261708849 P; 13.09.2013 US 201314026280
(71) Applicant: Andritz, Inc., Glens Falls, NY 12801 (US)
(72) Inventor: Brandino, Lindsay, Alpharetta, GA Georgia 30004 (US)
(74) Representative: HOFFMANN EITLE

(57) **Abstract**

A feedwell (12, 400, 500, 503) for a clarifier comprises: at least one inlet pipe (11, 410, 510) configured to introduce a slurry into an upper zone (415, 515) of the feedwell (12, 400, 500); a transition zone (460, 650) disposed below the upper zone (415, 515); and one or more plates (440, 540, 541, 542, 543) disposed proximate to an inner feedwell wall (420, 520) and a shaft (470, 570, 573) at a bottom of the transition zone (460, 650). The new feedwell design may better dissipate the entrance energy of the slurry-liquid combination exiting the feedwell (12, 400, 500) and entering the clarifier. Plates (440, 540) of various shapes may be provided proximate to the bottom of the feedwell (12, 400, 500). The plates (440) may cause a change in the flow direction of the feed, from mostly horizontal to mostly vertical, to slow the slurry. The provision of plates (440, 540) at the bottom of a feedwell (12, 400, 500) in a clarifier may advantageously reduce the velocity of the materials entering the clarifier, or may increase the uniformity of the flow rate of the materials; while reducing or maintaining the amount of shear force, turbulence, or other forces that may have a detrimental effect on clarification. This may, in turn, permit solids to better "settle out" of the slurry-liquid combination, and thus improve the clarity of the removed liquid.

## Description

### BACKGROUND OF THE INVENTION

Clarifiers are well known and used in the pulp and paper industry and other industries to separate lighter liquids from heavier mixtures such as green liquor and dregs or weak wash and lime mud or the like. Clarified liquids generally rise to the top of the clarifier while heavier mixtures, which may contain solids, generally settle to the bottom of the clarifier. These clarified liquids and settled solids may be recycled for continued use in the Kraft process or other chemical manufacturing processes.

Clarifiers generally consist of a tank with a sloped floor leading to a center well where the settled solids may be removed. Either a bustle pipe assembly or an overflow and weir may be used for removing the clarified liquid. The initial comingled mixture of light liquids and heavier mixtures is known in the paper industry as "feed slurry." An inlet flow of feed slurry generally enters a clarifier through a submerged feedwell in the center of the tank. The area below the feedwell is the settling zone. In installations with a bustle pipe, the area above the bustle pipe is used as storage for clarified liquid (tanks with an overflow and weir generally do not have a storage area). Clarifiers may also include a drive assembly consisting of a motor and a rake shaft used to turn a submerged rake mechanism that moves settled solids slowly towards the centerwell for removal.

The purpose of a feedwell generally is to dissipate the entrance energy of an inlet flow of feed slurry so that the flow enters the settling zone as a plug flow. A "plug flow" refers to a flow with a substantially constant velocity across a given area. Solids within the slurry may stick to each other, or flocculate, to form larger solids, which can settle out of the slurry more quickly than smaller particles. High velocity of the flow of feed slurry inside the clarifier (e.g., due to the velocity at which the flow of feed slurry enters the feedwell) can lead to solids not being able to settle out from the lighter liquid portion of the slurry. As a result, these solids may be carried over into the "clarified" liquid. This incomplete separation can delay production in many chemical manufacturing industries and increase costs of production. High turbulence and shear force of the flow of feed slurry within the clarifier can interfere with the solids flocculating together, which decreases their settling efficiency.

In general, there are two main classical designs for a feedwell. A first feedwell design includes two inlet flows meeting inside the feedwell (as described in US Pat. No. 7,547,396 for example), and reduces the velocity of each by directing them directly at each other; such that the force or velocity of each inlet flow operates to reduce the force or velocity of the other. Flow analysis indicates that opposing tangential inlets cause substantial turbulence and shear in the colliding flows. The turbulence and shear may interfere with the solids flocculating together, reduce the settling of solids from the flow, and negatively impact the clarity of the liquid removed from the flow.

A second feedwell design includes a single inlet flow entering a feedwell tangentially (for example, as described in US Pat. No. 8,021,559 and US Pat. App. No. 2011/0079563). A single tangential inlet may not decrease the velocity magnitude of the inlet flow, but merely cause the flow to swirl as it reaches the clarifier. The swirling flow may have a high upward velocity that lifts solids in the slurry and reduces the settling of solids out of the slurry.

### SUMMARY OF THE INVENTION

It is the object underlying the present invention to provide a new feedwell design that may better dissipate the entrance energy and may better reduce the velocity of the inlet flow of a mixture comprising a slurry of liquid and solid material. This initial mixture of comingled light liquids and heavier mixtures, which may contain solids, is often referred to as "feed slurry" or merely a "slurry" in the paper industry. The new feedwell design shall permit solids to better "settle out" of the feed slurry, and thus improve the clarity of the removed liquid. In order to achieve this object, the present invention provides a feedwell for a clarifier as recited in claim 1.

A new clarifier has been conceived that separates liquid from solids in a slurry. An example embodiment of the clarifier includes an inlet pipe, which is commonly referred to as a "feed pipe" in the paper industry. The feed pipe generally enters a raised cylindrical section attached to the top or side of a feedwell. The feedwell has an inner wall at its perimeter and a flow distribution device below the feed pipe entrance. The flow distribution device may include triangular plates, circular plates, oval plates, louvers, blades, rings, a perforated, slotted, or conical plate, or other structure that guides and transforms the flow of the slurry into a generally uniform and relatively slow moving flow.

In operation, the liquid and slurry mixture generally known as a "feed slurry" flows from the feed pipe into the raised cylindrical section and flows downward into a transition zone where the slurry moves in a homogeneous circular and downward direction. The inner walls of the feedwell may provide the transition zone. From the transition zone, the feed slurry flows into the flow distribution device. An exemplary flow distribution device may comprise one or more plates attached to a center vertical hollow shaft of the feedwell. The plate(s) may be a single circular flat metal plate attached to the center shaft of the feedwell, a stack of annular flat metal plates attached to the shaft, or triangular metal blades, rectangular metal blades, circular metal blades, oval metal blades, or louvers arranged around the shaft. The gaps between the plates, blades, or louvers pass the slurry into the clarifier. The plates deflect the feed slurry and change the flow direction of the feed slurry from a horizontal to a vertical direction, and slow the feed slurry. The provision of plates at the bottom of a feedwell may reduce the velocity of the materials entering the clarifier, or may increase the uniformity of the flow rate of the materials, while reducing or maintaining the amount of shear force, turbulence, or other forces that may have a detrimental effect on clarification.

Certain examples of this invention relate to a feedwell for a clarifier, the feedwell comprising: a shaft vertically extending through a center of the feedwell, at least one feed pipe configured to introduce slurry into an upper zone of the feedwell, a transition zone disposed below the upper zone, and the one or more plates being proximately disposed to an inner feedwell wall and the shaft at a bottom of the transition zone.

Other example embodiments relate to a clarifier comprising the claimed feedwell. The clarifier, which may be used for separating the liquid and solids from feed slurry, may comprise a tank. A motor may be connected to a rake shaft vertically disposed through a center of the tank. A feedwell comprising plates adapted to reduce the velocity of the feed slurry or to increase a uniformity of a flow rate of the feed slurry traveling through the feedwell into the clarifier may also be provided. The clarifier may further comprise a bustle pipe horizontally disposed across the tank above the feedwell and feed pipe, wherein the bustle pipe has at least one hole in its circumference adapted to receive liquid that has been separated from the slurry. The clarifier may further include a settling zone that may be disposed below the exit of the feedwell, a rake connected to the rake shaft vertically disposed through the center of the tank and disposed below the settling zone proximate to a bottom portion of the tank, and a centerwell disposed at a bottom of the tank below the settling zone and rake. This centerwell may be adapted to receive settled out solids from the settling zone. The bottom of the tank may be angled toward the centerwell such that the centerwell is located at an elevation below a bottom portion of walls of the tank and an outlet pipe connected to the centerwell may be adapted to remove the settled solids from the tank, in certain example embodiments.

In other example embodiments, a method for dissipating the entrance energy of a mixture comprising liquids and solids in a slurry entering a clarifier may be provided. The method may comprise feeding the mixture into a feedwell through a feed pipe at a first flow rate and permitting the mixture to flow in a downward direction from an upper zone of the feedwell to a transition zone of the feedwell toward plates disposed substantially horizontally between a central vertically disposed hollow shaft and inner walls of the feedwell proximate to an exit of the feedwell. The plates may reduce the first flow rate of the mixture to a second flow rate as the mixture flows past the plates through the exit. In certain examples, the second flow rate may have a lower velocity than the first flow rate. In still further examples, the second flow rate may have a greater uniformity than the first flow rate.

In yet another example embodiment, a method for separating a liquid from a mixture comprising liquids and solids from a slurry to clarify the liquid may be provided. The method may comprise dissipating the entrance energy of the mixture as described above. However, the method may further comprise causing the mixture to exit the feedwell at the second flow rate. The second flow rate may have a lower velocity or greater uniformity than the first flow rate. The mixture may enter a settling zone of a clarifier at the second flow rate. At least some solids may settle out of the mixture in the settling zone. In this regard, the solids may fall downward toward a centerwell for collection. Additionally, a clarified liquid comprising liquid that is substantially free of solids may enter a bustle pipe provided above the feedwell through a hole in the circumference of the bustle pipe. The slower or more uniform second flow rate may cause the solids to settle out of the mixture in the settling zone of the clarifier more quickly or to a greater extent than the solids would have otherwise settled out of the mixture if the plates had not been present in the feedwell. Through the addition of the aforesaid plates to the feedwell, and the accompanying improvements in flow rate, the clarity of the clarified liquid separated from the mixture may advantageously be improved.

### BRIEF DESCRIPTION OF THE DRAWINGS

FIG. 1 illustrates a conventional-style single tangential inlet feedwell.

FIG. 2 illustrates a conventional-style opposing tangential inlet feedwell.

FIG. 3 illustrates generally an arrangement of a clarifier according to certain example embodiments.

FIG. 4(a) illustrates a clarifier feedwell according to certain example embodiments.

FIGS. 4(b)-(c) illustrate example arrangements of plates that may be used in connection with a clarifier feedwell in certain examples.

FIGS. 4(d)-(f) illustrate example plates that may be used in connection with a clarifier feedwell in certain examples.

FIGS. 5(a)-(d) illustrates other example embodiments of clarifier feedwells.

FIG. 6 is a process flow diagram illustrating an example process by which the entrance energy of feed slurry entering a feedwell from a feed pipe may be dissipated.

FIG. 7 is a process flow diagram illustrating an example overall process by which liquids and solids in a feed slurry may be separated via the clarifier in order to produce a liquid having an improved clarity.

### DETAILED DESCRIPTION OF THE INVENTION

The invention disclosed herein may be used in the separation of liquid(s) and solid(s) from feed slurry materials or the like. In certain examples, a clarifier feedwell described herein may sufficiently dissipate the entrance energy of the total flow of the feed slurry (e.g., of the mixture of inlet liquid and solid materials) into a clarifier such that the total flow enters a settling zone as a plug flow. (e.g., such that the velocity of the feed slurry mixture is substantially constant across any cross-section of the area of the flow perpendicular to the axis of the flow). This reduced or substantially uniform or constant velocity may enable any solids in the feed slurry to settle out of the mixture more quickly or more easily than in situations where the velocity of the feed slurry entering the feedwell is inconsistent or too high. This improved "settling out" may in turn improve the clarity of the liquid that is ultimately separated or removed from the clarifier.

The existing designs for clarifier feedwells do not sufficiently dissipate the entrance energy or reduce the velocity inside the clarifier. Further, even in cases where the velocity is reduced, turbulence and shear force may be increased. Turbulence or shear force present in the clarifier may also have a detrimental effect on the ability of solids to settle out of the mixture. Thus, in certain existing clarifier feedwells, the solids in the feed slurry may not sufficiently settle out, and the clarity of the separated or removed liquids (e.g., the clarified liquids) may suffer.

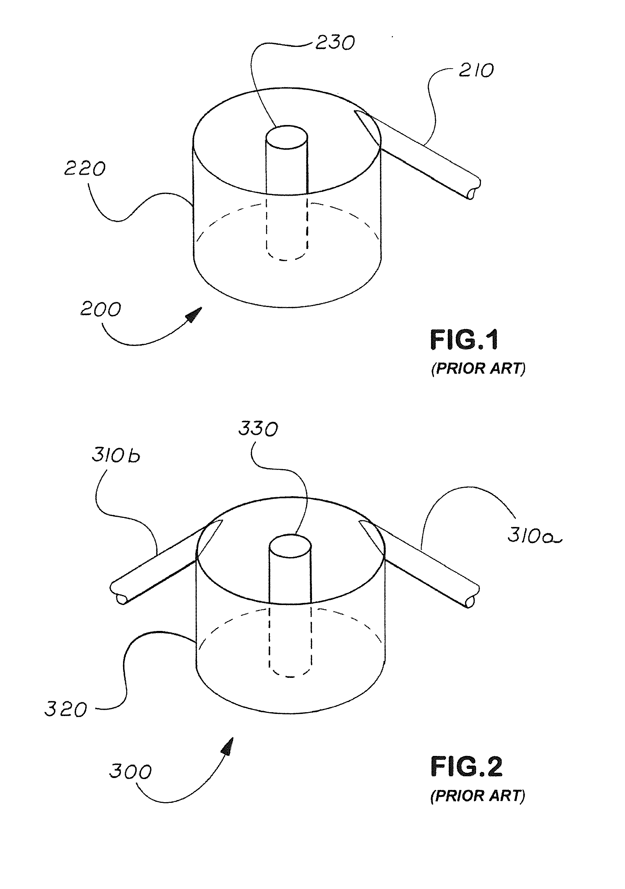

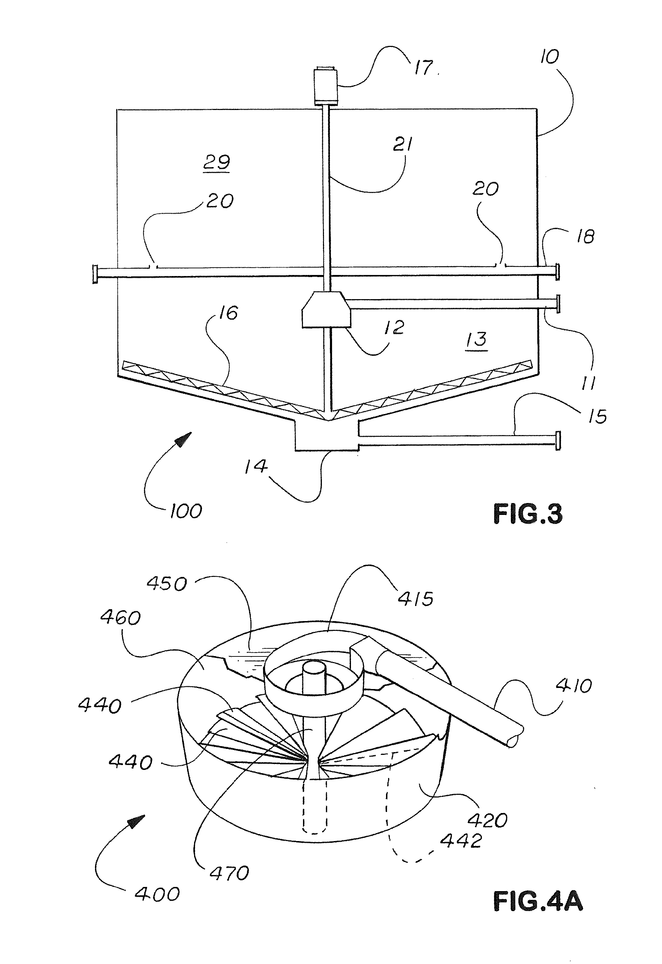

Figs. 1 and 2 show conventional style feedwells used in clarifiers. The feedwell 200 of Fig. 1 shows a single entry feedwell, where the feed slurry enters the feedwell 200 through a feed pipe 210 at the tangent to the inner feedwell wall 220 of the feedwell 200. A shaft 230 runs through the center of the feedwell 200. The feedwell 300 of Fig. 2 exemplifies a dual or opposing tangential entry design. In Fig. 2, the feed slurry enters feedwell 300 through dual (two) feed pipes 310a and 310b fixed tangentially to the inner feedwell wall 320 of the feedwell 300. Feed slurry passes downward through the interior of feedwells 200 and 300, exiting into the settling zone of the clarifier (see Fig. 3, 13).

There is a long felt need to improve the clarity of the liquids removed or separated from feed slurry mixtures via a clarifier, and particularly to reduce the velocity of the flow in the feedwell without disadvantageously increasing other detrimental forces such as turbulence or shear force.

In certain example embodiments, a new clarifier including an feedwell design that better dissipates the entrance energy and reduces velocity, without substantially increasing turbulence or shear force, may be provided.

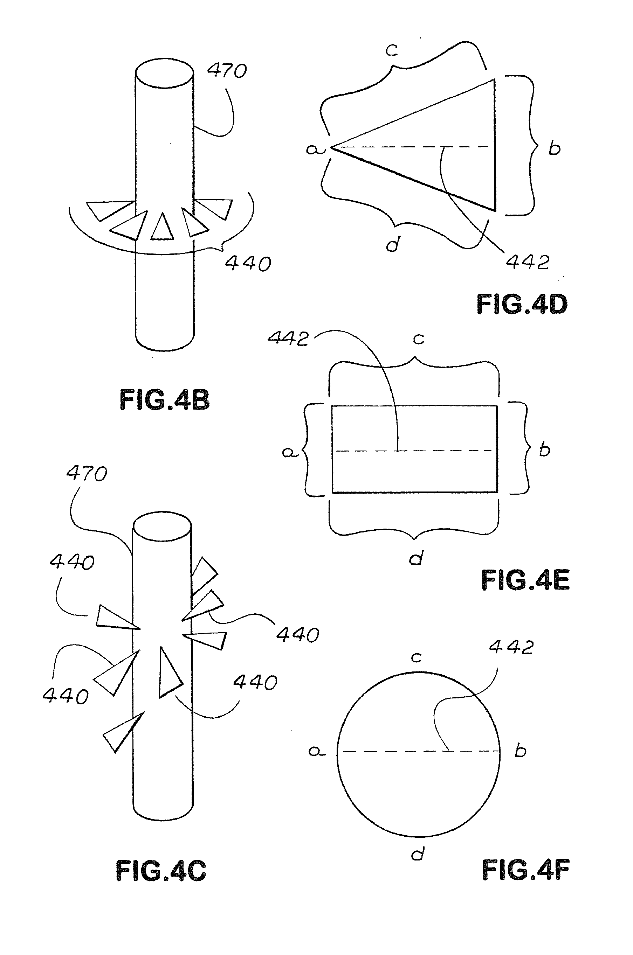

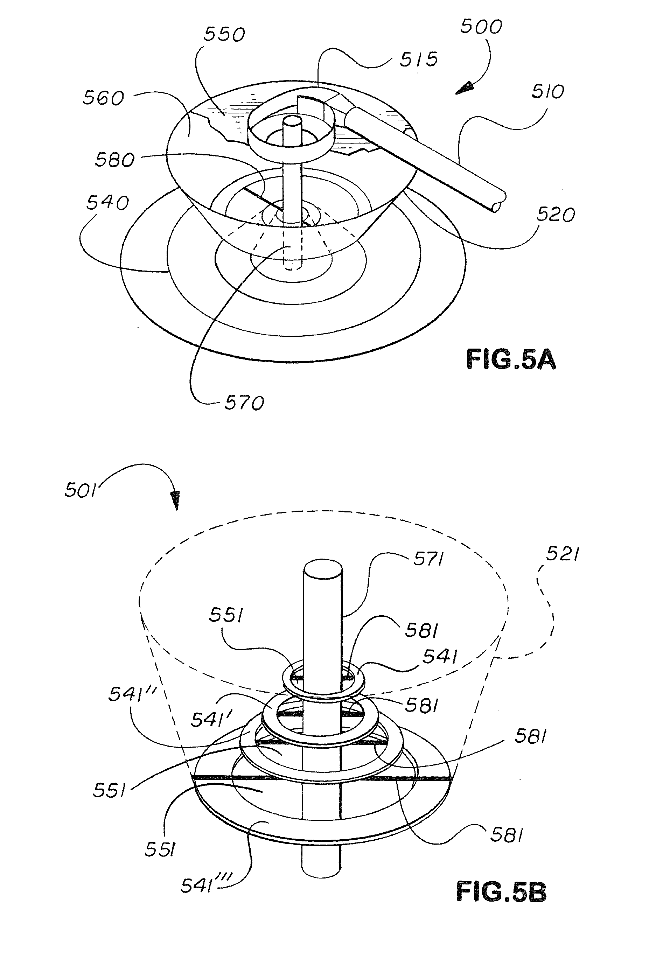

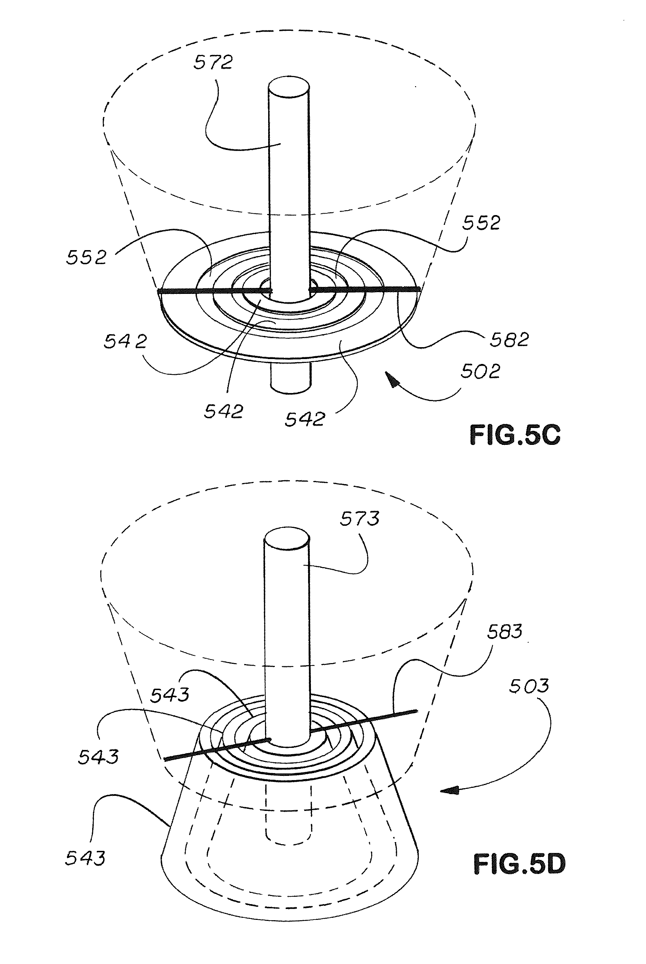

The general arrangement of an example embodiment of a new clarifier including a feedwell is illustrated at Fig. 3. The clarifier includes a tank 10. Fig. 3 illustrates a clarifier whereby feed slurry would flow into the tank 10 through the single feed pipe 11 I of the submerged feedwell 12. The feedwell 12 is positioned in the center of the tank 10 and centered on the rake shaft 21. The feedwell is described in detail below with respect to Figs. 4 and 5.

Turning back to Fig. 3, the feedwell has a hollow shaft (see Fig. 4A, 470) to allow for the rake shaft 21 to penetrate it and rotate freely. A motor 17 may be positioned on top of the tank 10 to rotate the rake shaft 21. From the feedwell 12 the feed slurry is directed to the settling area or zone 13 of the tank 10. Once in the settling zone 13, the solids settle out of the feed slurry and fall toward the bottom of tank 10. The solids are moved via a rake 16 toward the centerwell 14 located at the bottom of tank 10. From the centerwell 14, the solids are pumped (device not shown) out of tank 10 through the underflow outlet piping 15. The clarified liquid rises to the upper portion of the settling zone 13 and collects in the storage area 29 above the bustle pipe 18. Clarified liquid from storage area 29 enters the bustle pipe 18 through one or more holes 20 positioned along the circumference of the bustle pipe 18. The clarified liquid is pumped (device not shown) out of the tank through the bustle piping 18.

Fig. 4(a) illustrates an example embodiment of feedwell 12. Particularly, Fig. 4(a) illustrates submerged clarifier feedwell 400. In the Fig. 4(a) embodiment, the feed slurry (not shown) is fed to a raised cylindrical section 415 attached to the top surface 450 of the feedwell 400 through a tangential inlet pipe 410. In certain examples, the feed pipe may be provided substantially tangentially to the feedwell, such that the feed pipe communicates with the upper zone of the feedwell. In other examples, the feed pipe may be arranged at an angle, such that the feed slurry travels at an upward angle to enter the feedwell. This may advantageously assist in reducing the velocity of the feed slurry in some instances.

The feed slurry enters the feedwell 400 proximate to the upper zone 415, with a substantially or at least partially horizontal velocity in certain instances. The velocity may also be circular in some embodiments. The feed slurry flow moves from the upper zone 415 downward through the transition zone 460, at least partially due to the force of gravity, toward to bottom end of the feedwell 400. In certain instances, the feed slurry may move in a downward and substantially homogeneous circular direction. However, the feed slurry may also have a horizontal flow as it flows from the upper zone to the transition zone, arising from the way in which it has entered the feedwell. As the feed slurry flows through the transition zone toward a lower end of the transition zone, the feed slurry encounters multiple plates 440 disposed proximate to the bottom of the feedwell 400; e.g., proximate to the bottom of the transition zone. In certain example embodiments, these plates may be substantially circular, oval, triangular, or rectangular in shape. However, any appropriate shape may be used in different example embodiments.

The plates 440 may be attached to the hollow shaft 470 of the feedwell 400, extending from the hollow shaft out toward the inner feedwell walls 420. In certain instances, the plates 440 may be attached to the inner feedwell wall 420. However, in other examples, the plates 440 may extend toward the inner feedwell walls 420 without contacting the walls, or may partially or fully contact the walls without being attached thereto. The plates may be provided at substantially the same elevation with respect to each other at the circumference of the hollow shaft, or may be provided in a vertically staggered manner at a plurality of elevations and locations around the circumference of the hollow shaft 470. Examples of these possible configurations are illustrated in Figs.4(b)-(c). For example, Fig. 4(b) illustrates plates 440 disposed at a substantially consistent vertical position on the hollow shaft 470. Fig. 4(c), on the other hand, illustrates plates 440 disposed at different vertical elevations on the hollow shaft such that the plates are vertically staggered.

Spaces may be provided between each plate 440 in order to allow the feed slurry to move past the plate 440. The spaces may be of any suitable width. In certain instances, plates 440 may be angled slightly vertically as one moves from the hollow shaft 470 along the plates 440 toward the inner feedwell wall 420 of the feedwell 400; e.g. such that an end (b) of the plates proximate to the inner feedwell wall is disposed at an elevation higher than that of an end (a) proximate to the hollow shaft. Furthermore, plates 440 may be disposed at an angle along a longitudinal axis 442, such that one edge (c) is elevated above the other edge (d) in order to create more space between the plates through which the feed slurry may pass. In other examples, the plates 440 may be disposed substantially horizontally, or flat, in all or both respects (e.g., with respect to elevation of each end and elevation of each edge). Figs. 4(d)-(f) more clearly illustrate plates having ends (a) and (b) and edges (c) and (d). The example configurations illustrated in 4(d)-(f) of triangular, rectangular, and substantially circular plates, respectively, may be used in connection with any type of positioning of plates 440 (e.g., as shown in Fig. 4(b), as shown in Fig. 4(c), contacting feedwell inner walls, not contacting feedwell walls, or in any suitable positioning configuration not shown herein).

Additionally, the spaces provided between each plate 440 may permit the flow of feed slurry through the plates. In certain examples, the plates may cause a change in the flow direction of the feed. For example, the feed slurry may enter the feedwell having a substantially horizontal velocity or flow. However, as the feed slurry moves in an at least partially horizontal direction (e.g., possibly circular) through the upper zone, into the transition zone, and toward the bottom of the feedwell, the plates may help to change the at least partially (and possibly substantially) horizontal flow to a flow that is mostly vertical. In certain instances, this change in the direction of the flow may help slow the velocity or force of the feed slurry. In addition to slowing the velocity of the feed slurry, the plates may also direct the feed slurry in a manner such that it enters the settling zone 13 (e.g., shown in Fig. 3) of the tank with a substantially even downward flow. In certain examples, the plates may slow the velocity of the feed slurry to a substantially even flow rate without increasing turbulence or shear force.

In further example embodiments, submerged feedwell 12 (e.g., as illustrated in Fig. 3) may take the shape of a truncated cone. Feedwell 500 illustrated in Fig. 5(a) is one such example. In this embodiment, feed slurry enters the raised cylindrical section 515 attached to the top surface 550 of the feedwell 500 through an inlet pipe 510 attached tangentially to the raised cylindrical section 515. In certain example embodiments, the feed pipe 510 may be disposed substantially tangentially to the feedwell. In other examples, the feed pipe may be disposed at an angle with respect to horizontal, such that a velocity of the feed slurry may advantageously be reduced as it travels up the angled pipe toward the feedwell. The angle of the feed pipe may be between 0.01 and 90.00 degrees with respect to the horizontal.

The feed slurry enters the feedwell 500 proximate to the upper zone 515, and moves downward through the transition zone 560 at least partially due to the force of gravity, toward the bottom end of the feedwell 500. In certain instances, the feed slurry may move in a downward and substantially homogeneous circular direction. However, the feed slurry may also have a horizontal flow arising from the way in which it has entered the feedwell. As the feed slurry flows through the transition zone toward a lower end of the transition zone, the feed slurry encounters substantially flat and circular plates 540 disposed proximate to the bottom of the transition zone or the bottom of the feedwell.

In certain examples, the plates may cause a change in the flow direction of the feed. For example, the feed slurry may enter the feedwell having a substantially horizontal velocity or flow. However, as the feed slurry moves in an at least partially horizontal direction (e.g., possibly circular) through the upper zone, into the transition zone, and toward the bottom of the feedwell, the plate(s) may help to change at least partially (and possibly substantially) the horizontal flow to a flow that is mostly vertical. In certain instances, this change in the direction of the flow may help slow the velocity or force of the feed slurry. In addition to slowing the velocity of the feed slurry, the plates may also direct the feed slurry in a manner such that it enters the settling zone 13 (e.g., shown in Fig. 3) of the tank with a substantially even downward flow. In certain examples, the plate(s) may slow the velocity of the feed slurry to a substantially even flow rate without increasing turbulence or shear force.

Feedwell 500 includes at least one plate 540 concentric with the hollow shaft 570 disposed such that the feed slurry flows past the plate(s) 540 as exiting the feedwell into the settling zone 13 of the clarifier (e.g., as illustrated in Fig. 3). However, a plurality of concentric plates 540 may be provided in certain example embodiments. The flat circular plate(s) may be supported by a frame 580 that is disposed proximate to the hollow shaft 570 and the feedwell walls 520. In certain examples, frame 580 may be of or include a substantially horizontally disposed bar connected to both the hollow shaft 570 and the inner feedwell walls 520. The bottom of the plate(s) 540 may end at the bottom of the inner feedwell walls 520. Though not illustrated in the drawings, in some examples, plate(s) 540 may extend beneath example feedwell 500 (e.g., feedwell 12 generally illustrated in connection with the clarifier 100 shown in Fig. 3) into the settling zone 13 in clarifier 100. In this case, in certain instances, the plate(s) 540 may optionally be connected to the rake shaft 21. Figs. 5(a)-(d) illustrate different example embodiments of the feedwells. Figs. 5(b)-(d) only illustrate the shell of the feedwell, the plates, and optional support frames. The other elements described herein for other embodiments, while present, are not shown.

In certain instances, the plates may be substantially circular and flat with hollow centers. For example, the plates may be annular. In certain example embodiments, the plates may be concentrically disposed in the same plane. In other examples, the plates may be disposed at staggered vertical positions along the hollow shaft.

An example of a feedwell 501 including vertically staggered annular plates 541, 541', 541", 541"' is illustrated at Fig. 5(b). Hollow shaft 571 runs vertically through the hollow centers of plates 541. In certain instances, the diameter of the hollow center of the plates 541 may increase in a downward vertical direction; e.g., such that the hollow center (e.g., cut out center portion) of the plates has a greater diameter at a lower position within the feedwell (e.g., moving closer to the bottom of the feedwell) as compared to a plate disposed at a higher position (e.g., closer to the top of the feedwell), in certain example embodiments. In certain instances, the diameter of the cut out may gradually increase moving in a downward direction along hollow shaft 571 as illustrated in Fig. 5(b). A support frame 581 may be provided across the diameter of each plate in order to secure the plate in a fixed position. The support frame is fixed to the plate, and is also fixed to the hollow shaft, the inner feedwell walls, or both.

The feed slurry may be fed into the feedwell in a manner similar to the 5(a) embodiment. As the feed slurry travels from the upper zone to the transition zone, the annular-like plates 541 and openings 551 therein may help direct the velocity of the feed slurry in a vertical direction as opposed to a horizontal or circular direction. In other examples, the diameter of the hollow center may decrease moving down hollow shaft 571.

Fig. 5(c) illustrates another example of the feedwell 502. In Fig. 5(c), concentric annular plates 542 are disposed in the same plane. The plates are provided at a bottom portion of feedwell 502. One or more support bars 582 may be connected to each plate, as well as to the hollow shaft 572, the inner feedwell wall, or both. In certain instances, one support bar may be used for all plates.

Plates 542 create a barrier that will slow the movement of the feed slurry as it travels from the inlet (not shown in Fig. 5(c)) toward the exit of the feedwell, while openings 552 between the concentric plates 542 may assist in converting any horizontal or circular velocity into substantially vertical velocity. Further, the openings 552 may help to increase the uniformity of the flow rate of the feed slurry from the feedwell into a clarifier.

Fig. 5(d) illustrates a further example of the feedwell 503. In the Fig. 5(d) embodiment, nested hollow cones are disposed proximate to the bottom of the feedwell. In certain instances, nested hollow cones 543 may serve a similar function to plates 440, 540, 541, 542, and 542, in that they may alter a velocity of the incoming feed slurry from horizontal to vertical, they may reduce the overall velocity of the feed slurry, or they may increase the uniformity of the flow rate of the feed slurry. In some cases, the smaller opening of each of cones 543 may be located closest to the bottom of the feedwell. The smaller openings may be located within the same plane. They may be secured to the hollow shaft or the feedwell walls, or both, via a support frame 583. In certain instances, the same support frame may connect most or all of the nested hollow cones. In further examples, the nested hollow truncated cones may be disposed in a vertically staggered manner along the hollow shaft 573. The smallest inner cone may be disposed at the highest elevation along the hollow shaft in certain instances, with the progressively larger cones being disposed progressively lower along the hollow shaft. In other example embodiments, the largest outer cone may be disposed at the highest elevation along the hollow shaft, with the progressively smaller cones being disposed progressively lower along the hollow shaft. When necessary, one or more support bars 583 may be utilized to secure the cones in place.

It is also possible for the feedwell body to be a straight cylinder, as opposed to a truncated cone, with plates 540-543 (e.g., as described with respect to the Fig. 5(a)-5(d) embodiments) at the bottom of the feedwell.

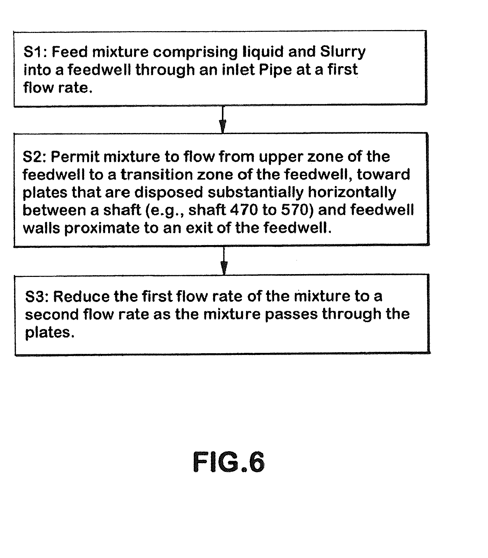

Fig. 6 illustrates an example method for dissipating entrance energy of a mixture comprising liquids and solids into a clarifier. In Step 1 (S1), the mixture is fed into a feedwell through the feed pipe at a first flow rate. In Step 2 (S2), the mixture travels downward through the feedwell through plates provided proximate to a hollow shaft of the feedwell, inner walls of the feedwell, or both. In S3 (S3), the plates cause a velocity of the first flow rate may be reduced, or a uniformity of the flow of the mixture increased, as the mixture travels through the plates, at least partially due to the provision of the plates, such that the mixture exits the feedwell or enters the clarifier at a second flow rate. In certain examples, the second flow rate has a lower velocity than the first flow rate. Further, the second flow rate may have a greater uniformity than the first flow rate.

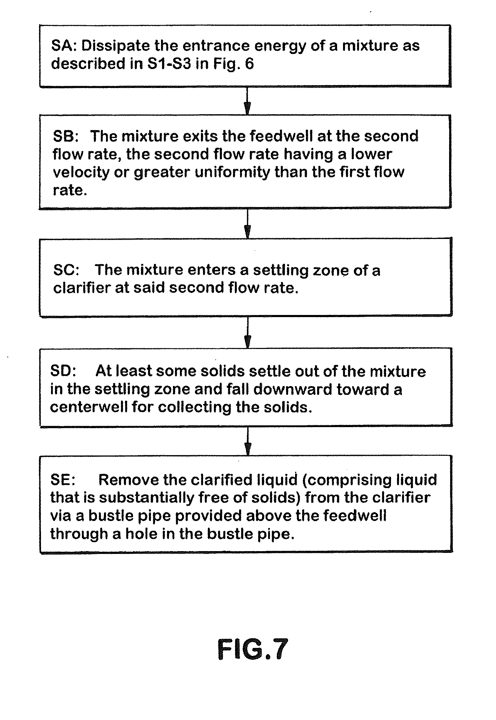

In certain example embodiments, a method for separating a liquid from a mixture to clarify the liquid may be provided. Fig. 7 illustrates a flow diagram for an example embodiment. In Step A (SA), the entrance energy of the mixture as it travels from the feedwell into the clarifier may be dissipated in the manner described above with respect to Fig. 6. In Step B (SB), after the mixture travels through the plates 440 or 540, the mixture exits the feedwell at the second flow rate. In certain examples, the second flow rate has a lower velocity than the first flow rate. Further, the second flow rate may have a greater uniformity than the first flow rate. In Step C (SC), the mixture enters a settling zone of the clarifier at the second flow rate rather than the first flow rate. In Step D (SD), at least some of the solids may settle out of the mixture in the settling zone and fall downward toward a centerwell for collecting the solids. The solids may settle out of the mixture in the settling zone of the clarifier more quickly or to a greater extent (e.g., at an increase rate or in an increased amount) than the solids would have otherwise settled out of the mixture if the plates had not been present in the feedwell at least partially due to the slower or more uniform second flow rate, such that the increase in rate or amount of settled out-solids improves a clarity of a clarified liquid separated from the mixture. Finally, in Step E (SE), the clarified liquid comprising liquid that is substantially free of solids is removed from the clarifier via a bustle pipe provided above the feedwell through a hole in the bustle pipe.

Thus, due to the provision of the plates (e.g., the spaces provided there between) in the feedwell, the degree to which or ease at which a solid or solids may settle out of a mixture comprising liquids and solids in the settling zone of the clarifier may be improved. In certain example embodiments, this ease of settling out for the solids may advantageously increase the clarity of the clarified liquid separated from the mixture.

Certain example clarifier feedwells and methods for dissipating the entrance energy of a mixture from a feedwell into a clarifier described herein may advantageously (1) slow the velocity of a feed slurry flow entering a clarifier; (2) without increasing shear force or turbulence (and in some cases, reducing or even eliminating shear force or turbulence within the feedwell and in areas proximate thereto; and (3) dissipate the energy of the flow such that the total flow enters a settling zone of a clarifier as a plug flow - e.g., wherein the velocity of the mixture is substantially constant across the cross-section of the area below the feedwell in the settling zone perpendicular to the axis of the hollow shaft, according to certain embodiments.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the invention as defined by the appended claims.

## Claims

1. A feedwell (12, 400, 500, 503) for a clarifier comprising:
- at least one inlet pipe (11, 410, 510) configured to introduce a slurry into an upper zone (415, 515) of the feedwell (12, 400, 500);
- a transition zone (460, 650) disposed below the upper zone (415, 515); and
- one or more plates (440, 540, 541, 542, 543) disposed proximate to an inner feedwell wall (420, 520) and a shaft (470, 570, 573) at a bottom of the transition zone (460, 650).

2. The feedwell (12, 400, 500) of Claim 1, wherein the plates (440, 540) have a substantially triangular shape, a substantially rectangular shape, or a substantially circular or oval shape.

3. The feedwell (12, 400, 503) of Claim 1, wherein the plates (440, 543) are nested, hollow, truncated cones, and are concentrically disposed around a support frame (583) of the feedwell (12, 400, 503).

4. The feedwell (12, 400, 503) of Claim 1, wherein the plates (440, 543) are nested, hollow, truncated cones, and are disposed in a vertically staggered manner along the shaft (470, 573) of the feedwell (12, 400, 503) such that a smallest inner cone is disposed at a highest elevation along the shaft (470, 573) with progressively larger cones being disposed progressively lower along the shaft (470, 573).

5. The feedwell (12, 400, 500) of Claim 1, wherein the plates (440, 540, 541, 542) have a removed center portion, are concentrically disposed around the shaft (470, 570) of the feedwell (12, 400, 500), and have a substantially circular shape.

6. The feedwell (12, 400, 500) of Claim 5, wherein a diameter of the removed center portion of the circular plate (440, 541) gradually changes in a downward direction.

7. The feedwell (12, 400, 500) of Claim 5, wherein the plates (440, 540, 542) are substantially annular and are disposed horizontally along a fixed plane.

8. The feedwell (12, 400, 500) of Claim 1, wherein the inlet pipe (11, 410, 510) to the feedwell (12, 400, 500) comprises a single inlet pipe (11, 410, 510) and the single inlet pipe (11, 410, 510) is
disposed substantially tangentially to the top of the feedwell (12, 400, 500), or
disposed at an angle between 0.01 degrees and 90.00 degrees with respect to the horizontal.

9. The feedwell (12, 400) of Claim 1, wherein a first end (a) of each plate (440) is connected to the shaft (470) coaxial with an axis of the feedwell (12, 400) and a second end (b) of each plate (440) is connected to the inner feedwell wall (420).

10. The feedwell (12, 400) of Claim 9, wherein the second end (b) of each plate (440) is located at an elevation higher than that of the first end (a), such that the plates (440) tilt downwardly toward the shaft (470).

11. The feedwell (12, 400) of Claim 10, in which a first edge (c) of each plate (440) is located on one side of a longitudinal axis (442) of the plate (440), and a second edge (d) is located on the other side of the longitudinal axis (442) of the plate (440), wherein the first edge (c) is disposed at a higher elevation than the second edge (d), such that each plate (440) is tilted along the longitudinal axis (442).

12. The feedwell (12, 400, 500) of Claim 1, wherein one or more plates (440, 540) are disposed proximate to the inner feedwell wall (420, 520) at a plurality of elevations.

13. A clarifier for separating liquid and a slurry, comprising:
- a tank (10);
- a motor (17) connected to a rake shaft (21) disposed vertically through a center of the tank (10);
- a feedwell (12, 400, 500, 503) as claimed in any one of the preceding claims, the feedwell (12, 400, 500, 503) further comprising:
a hollow shaft (470, 570, 573) vertically extending through a center of the feedwell (12, 400, 500, 503); and
the upper zone (415, 515) of the feedwell (12, 400, 500, 503);
wherein the one or more plates (440, 540, 541, 542, 543) are disposed proximate to the inner feedwell wall (420, 520) and the hollow shaft (470, 570, 573) at the bottom of the transition zone (460, 650), proximate to an exit of the feedwell (12, 400, 500, 503) adapted to transfer the slurry into the tank (10) of the clarifier, wherein the plates (440, 540, 541, 542, 543) are adapted to reduce a velocity of or increase a uniformity of a flow rate of the slurry traveling through the feedwell (12, 400, 500, 503) into the clarifier;
- a bustle pipe (18) horizontally disposed across the tank (10) above the feedwell (12, 400, 500, 503), wherein the bustle pipe (18) has portions that define at least one hole in a circumference of the bustle pipe (18) adapted to receive a liquid that has been separated from the slurry;
- a settling zone (13) disposed below the exit of the feedwell (12, 400, 500, 503);
- a rake (16) connected to the rake shaft (21) of the tank (10) and disposed below the settling zone (13) proximate to a bottom portion of the tank (10);
- a centerwell (14) disposed at a bottom of the tank (10) below the settling zone (13) and the rake (16), adapted to receive settled out solids from the settling zone (13), wherein the bottom of the tank (10) is angled toward the centerwell (14) such that the centerwell (14) is located at an elevation below a bottom portion of walls of the tank (10); and
- an outlet pipe (15) connected to the centerwell (14) adapted to remove the settled out solids from the tank (10).

14. A method for dissipating an entrance energy of a mixture comprising liquids and solids entering a clarifier, the method comprising:
feeding the mixture into a feedwell (12, 400, 500, 503) through an inlet pipe (11, 410, 510) at a first flow rate, the mixture flowing in a downward direction from an upper zone (415, 515) of the feedwell (12, 400, 500, 503) to a transition zone (460, 650) of the feedwell (12, 400, 500, 503) toward plates (440, 540, 541, 542, 543) disposed substantially horizontally between a central vertically disposed shaft (470, 570, 573) and inner walls of the feedwell (12, 400, 500, 503) proximate to an exit of the feedwell (12, 400, 500, 503); and
reducing the first flow rate of the mixture to a second flow rate as the mixture passes through the plates (440, 540, 541, 542, 543).

15. The method of Claim 14, wherein the second flow rate has a lower velocity than the first flow rate.

16. The method according to Claim 14, wherein the second flow rate has a greater uniformity than the first flow rate.

17. A method for separating a liquid from a mixture comprising liquids and solids to clarify the liquid, the method comprising:
dissipating the entrance energy of the mixture according to the method of Claim 14;
exiting the mixture from the feedwell (12, 400, 500, 503) at the second flow rate, the second flow rate having a lower velocity or greater uniformity than the first flow rate;
introducing the mixture to a settling zone (13) of a clarifier at said second flow rate;
settling out at least some solids from the mixture in the settling zone (13), the solids falling downward toward a centerwell (14) for collecting the solids, where the solids settle out of the mixture in the settling zone (13) at an increased rate or in an increased amount than the solids would have otherwise settled out of the mixture if the plates (440, 540, 541, 542, 543) had not been present in the feedwell (12, 400, 500, 503) at least partially due to the slower or more uniform second flow rate, such that the increase in rate or amount of settled out-solids improves a clarity of a clarified liquid separated from the mixture; and
removing the clarified liquid, comprising a liquid that is substantially free of solids, via a bustle pipe (18) provided above the feedwell (12, 400, 500, 503) through portions defining a hole in a circumference of the bustle pipe (18).
